# EUROPÄISCHE PATENTSCHRIFT

(11) **EP 0 839 878 B1**
(45) Veröffentlichungstag und Bekanntmachung des Hinweises auf die Patenterteilung: **10.05.2000**
(21) Anmeldenummer: 96810724.3
(22) Anmeldetag: 31.10.1996
(51) Int. Cl.: C09D 11/00

(54) **Hotmelt-Tinte**
Hot-melt ink
Encre thermofusible

(43) Veröffentlichungstag der Anmeldung: 06.05.1998
(73) Patentinhaber: PELIKAN PRODUKTIONS AG, 8132 Egg (CH)
(72) Erfinder: Howald, Nicole, 8645 Jona (CH)
(74) Vertreter: Hagemann, Heinrich, Dr.rer.nat., Dipl.-Chem.

(56) Entgegenhaltungen:
- EP-A- 0 105 994
- EP-A- 0 610 090
- WO-A-91/18065
- US-A- 5 405 438
- US-A- 5 531 819
- DATABASE WPI Section Ch, Week 7709 Derwent Publications Ltd., London, GB; Class A82, AN 77-15308Y XP002028366 & JP 52 006 207 A (TOYO INK MFG KK) , 18.Januar 1977

## Beschreibung

Die vorliegende Erfindung bezieht sich auf Hotmelt-Tinten für Inkjet-Printer, genauer auf abrieb- und blockfeste Hotmelt-Tinten für Piezodrucker.

Hotmelt-Tinten liegen im allgemeinen bei Raumtemperatur in fester Form vor und verflüssigen sich bei den erhöhten Betriebstemperaturen des Ink-Jet-Printers, d.h. feinste Tintentröpfchen werden auf das Papier oder ähnliches Material aufgespritzt und verfestigen sich sofort nach Auftreffen auf das jeweilige Material. Hotmelt-Tinten erweisen sich als ausgesprochen vorteilhaft, da sie bei Raumtemperatur, z.B. während des Transports oder der Aufbewahrung in der festen Phase vorliegen. Da sich die Farbtropfen sofort nach Auftreffen auf das zu bedruckende Material verfestigen, wird ein Verlaufen der Tinte ausgeschlossen, wodurch sich die Druckqualität erhöht.

Die bisher verwendeten Hotmelt-Tinten zeichnen sich durch hohe Drucktemperaturen, d.h Temperaturen zwischen 100 und 140°C aus, die hohe Betriebstemperaturen der verwendeten Druckvorrichtung erfordern. Dies stellt eine starke Beanspruchung der in der Druckvorrichtung verwendeten elektronischen Bauteile dar, d.h. die Lebenserwartung einer solchen Druckvorrichtung ist auf Grund dieser extremen Anforderung nicht sehr hoch.

Ein weiteres Problem der bislang für niedrige Temperaturen entwikkelten Hotmelt-Tinten ist ihre geringe Abriebfestigkeit beziehungsweise ihre Haftung auf dem bedruckten Material. Häufig löst sich die Tinte bereits bei normaler Handhabung wie Biegen oder Knicken des bedruckten Materials. Wird das bedruckte Material bei wenig höheren als den normalen Temperaturen aufbewahrt, bleibt beim Stapeln des zum Beispiel frisch bedruckten Papiers die Tinte häufig auf der Rückseite des obenaufliegenden Blatts haften.

Ein weiteres, bisher nur ungenügend gelöstes Problem ist die Transparenz der farbigen Hotmelt-Tinten bei der Overhead-Projektion des bedruckten Materials. Bei niedrigen Drucktemperaturen muss die Viskosität der Tinte erniedrig werden. Niedrigere Viskosität wird durch vermehrte Zugabe von zum Beispiel Paraffin erreicht, ein erhöhter Paraffin-Gehalt bedeutet jedoch geringere Lichtdurchlässigkeit.

Ziel der vorliegenden Erfindung ist die Bereitstellung einer abrieb- und blockfesten Hotmelt-Tinte für Piezodrucker, die bereits bei einer Temperatur von etwa 80°C bis 100°C verdruckt werden kann. Die Tinte muss auf dem zu bedruckenden Material gut haften und normaler Handhabung, d.h. Knicken und Biegen des bedruckten Materials standhalten. Ein weiteres Ziel der vorliegenden Erfindung ist die Bereitstellung von farbigen Hotmelt-Tinten, deren Zusammensetzung es ermöglicht, dass sie auch bei niedrigen Drucktemperaturen transparent bleiben.

Die erfindungsgemässe Hotmelt-Tinte umfasst wenigstens vier verschiedene Komponenten:
a) eine bei Raumtemperatur feste Substanz mit einem Schmelzpunkt von 60 bis 80°C, die für Abrieb- und Kratzfestigkeit sorgt, in Form eines Copolymers aus Polyvinylpyrrolidon und langkettigen alpha-Olefinen,
b) eine haftvermittelnde Substanz mit einem Schmelzpunkt bis 100° C, die für Flexibilität und Haftung der Hotmelt-Tinte auf dem bedruckten Papier sorgt,
c) eine viskositätsvermittelnde Substanz mit einem Schmelzpunkt bis 100° C in Form eines Öls oder eines niedermolukularen Wachses und
d) Pigmente oder Farbstoffe.

Die der Erfindung gemässe Tinte hat einen vergleichsweise niedrigen Schmelzpunkt und zeigt trotz der niedrigen Schmelztemperatur sehr gute Haftungseigenschaften, d.h. sie ist kratz- und blockfest und widersteht Knicken und Biegen des bedruckten Papieres ohne sich von diesem zu lösen. Darüberhinaus zeichnet sich die der Erfindung gemässe Hotmelt-Tinte durch brilliante Farben aus, ist wasserfest und zeigt diese Eigenschaften auf allen zu bedruckenden Materialien.

Hotmelt-Tinten für Inkjet-Printer sollten gemäss einer ersten Ausführungsform der vorliegenden Erfindung mindestens eine Substanz enthalten, die bei normalen, d.h. Zimmertemperaturen, in festem Zustand vorliegt. Sie sollte darüberhinaus als Dispersionsmedium für die Pigmente und als Lösungsmittel für die Farbstoffe dienen.

Die verwendete Substanz sollte sich beim Erhitzen auf Temperaturen, die über deren Schmelzpunkt liegen verflüssigen und darüberhinaus bei Ink-Jet-Temperaturen thermostabil sein.
Diese bei Raumtemperatur feste Substanz sollte einen Schmelzpunkt von 60 bis 80°C, am meisten bevorzugt von etwa 60 bis 70°C besitzen.
Eine weitere Aufgabe der bei Raumtemperatur festen Substanz besteht darin, dass sie der Tinte Abrieb-, Kratz- und Blockfestigkeit sowie eine hohe Transparenz verleiht, wobei letzteres insbesondere bei der Verwendung farbiger Tinten von Bedeutung ist. Darüberhinaus verhindert die feste Substanz auf Grund ihrer Molekulargrösse, die grösser als diejenigen der anderen Ingredienzen sein sollte, das Absetzen der Farbstoffpartikel und sorgt für die Dispersion der Pigmente.
Als bei Raumtemperatur feste, sowie für Abrieb- und Kratzfestigkeit sorgende Substanz gemäss der vorliegenden Erfindung werden Copolymere aus Polyvinylpyrrolidon und langkettigen alpha-Olefinen bevorzugt, am meisten bevorzugt wird Poly(1-ethenylpyrrolidin-2-on/Triacont-1-en).

Die in der vorliegenden Erfindung als Haftvermittler verwendete Substanz kann in der flüssigen oder in der festen Phase vorliegen. Sie sollte im Vergleich zu der bei Raumtemperatur festen Substanz elastisch und hochviskos sein, sowie eine relativ hohe Polarität besitzen. Der Haftvermittler ist mit der bei Raumtemperatur festen Substanz mischbar und dient unter anderem dazu, die Pigmente in der Tinte zu dispergieren. Wenn Farbstoffe verwendet werden, verstärkt die als Haftvermittler dienende Substanz die Löslichkeit zwischen dem Farbstoff und der festen Substanz. Die eigentliche Aufgabe des Haftvermittlers besteht jedoch darin, für Flexibilität und Haftung der Hotmelt-Tinte auf dem Papier zu sorgen. Als bevorzugte haftvermittelnde Substanzen werden in der vorliegenden Erfindung Ester höherer Alkohole, am meisten bevorzugt ein Phthalatester des technischen Hydroabietylalkohols verwendet.

Als weiteren Inhaltsstoff der vorliegenden Erfindung ist eine Viskosität vermittelnde Substanz, die gleichzeitig als Trägersubstanz für die anderen Inhaltsstoffe dient, zu nennen. Diese Viskosität vermittelnde Substanz kann entweder als Öl oder als niedermolekulares Wachs vorliegen und sollte einen Schmelzpunkt bis 100°C besitzen. Die Menge der zugegebenen Viskosität vermittelnden Substanz richtet sich nach der gewünschten Drucktemperatur, bei höheren Temperaturen verringert sich die Menge, bei niedrigeren Temperaturen wird sie erhöht. Wünschenswert ist eine Viskosität im Bereich von 10 bis 20 mPas/s.
Als Viskosität vermittelnde Substanz werden bevorzugt niedermolekulare Wachse verwendet, bevorzugter Petrolium- Wachse, am meisten bevorzugt Paraffin.

Als vierten Inhaltsstoff der Hotmelt-Tinten der vorliegenden Erfindung sind die Pigmente und Farbstoffe anzuführen, die in der Mischung aus bei Raumtemperatur festem Wachs, dem Haftvermittler und dem Härter fein dispergiert oder gelöst vorliegen. Als Farbstoffe werden vorzugsweise für Gelb Solvent Yellow 162, für Rot Dispers Red 60, für Blau Solvent Blue 63 und für Schwarz Solvent Black 7 und als Pigment für Gelb Pigment Yellow 127, für Rot Pigment Red 122, für Blau Pigment Blue 15:3 und für Schwarz Furnaceruss verwendet.

### Beispiel

Die in der vorliegenden Erfindung verwendete, bei Raumtemperatur feste Substanz, die der Tinte Abrieb- und Kratzfestigkeit verleiht, ist ein Copolymer aus Polyvinylpyrrolidon und langkettigen alpha-Olefinen (Antaron® WP 660, hergestellt von ISP Global Technologies GmbH, Frechen, Deutschland).
Der verwendete Haftvermittler ist ein Phthalatester des technischen Hydroabietyl-Alkohols (Celolyn® 21-E synthetisches Harz, hergestellt von Hercules, Rijswijk, Niederlande).
Zur Einstellung der Viskosität wird ein Petroliumwachs, d.h. Paraffin 10809 (hergestellt von DEA, Hamburg, Deutschland) verwendet.
Die verwendeten Farbstoffe sind Solvent Yellow 162 (Neopen Gelb 075, hergestellt von BASF, Deutschland), Dispers Red 60 (Neopen Magenta SE 1443, hergestellt von BASF, Deutschland), Solvent Blue 63 (Kayaset Blue 714, hergestellt von Nippon Kayaku Co., Ltd, Japan) und Solvent Black 3 (Orient Oil Black 860, hergestellt von Orient Chemicals Inds., Ltd. Japan). Als Pigmente werden Pigment Yellow 127 (Permanent Gelb GRL 01, hergestellt von Hoechst, Deutschland), Pigment Red 122, (Hostaperm Rosa EB transp. von Hoechst, Pigment Blue 15:3 (Heliogenblau 7084, hergestellt von BASF, Deutschland) und Carbon Black (Monarch 880, hergestellt von Carbot Corporation, USA) verwendet.

Für eine der Erfindung gemässe, bei einer Temperatur von 80°C zu verdruckende Hotmelt-Tinte werden eingesetzt:
- Paraffin 10908 :: 63%
- Antaron® WP 660 :: 21%
- Cellolyn 21 :: 15%
- Neopen Gelb 075 (Beispiel für Farbstoff) :: 1%

## Patentansprüche

1. Abrieb- und blockfeste Hotmelt-Tinte für Ink-Jet-Printer, dadurch gekennzeichnet, daß die Hotmelt-Tinte umfaßt:
a) eine bei Raumtemperatur feste Substanz mit einem Schmelzpunkt von 60 bis 80° C, die für Abrieb- und Kratzfestigkeit sorgt, in Form eines Copolymers aus Polyvinylpyrrolidon und langkettigen alpha-Olefinen,
b) eine haftvermittelnde Substanz mit einem Schmelzpunkt bis 100° C, die für Flexibilität und Haftung der Hotmelt-Tinte auf dem bedruckten Papier sorgt,
c) eine viskositätsvermittelnde Substanz mit einem Schmelzpunkt bis 100° C in Form eines Öls oder eines niedermolukularen Wachses und
d) Pigmente oder Farbstoffe.

2. Hotmelt-Tinte gemäß Anspruch 1, dadurch gekennzeichnet, daß das Copolymer aus Polyvinylpyrrolidon und langkettigen alpha-Olefinen Poly (1-ethenylpyrrolidon-2-on/triacont-1-en) ist.

3. Hotmelt-Tinte gemäß Anspruch 1 oder 2, dadurch gekennzeichnet, daß die haftvermittelnde Substanz ein Phthalester des technischen Hydroabietylalkohols ist.

4. Hotmelt-Tinte gemäß einem der Ansprüche 1 bis 3, dadurch gekennzeichnet, daß die Viskosität vermittelnde Substanz ein Petroliumwachs, insbesondere Paraffin, ist.

5. Hotmelt-Tinte gemäß einem der Ansprüche 1 bis 4, dadurch gekennzeichnet, daß sie als Farbstoff Gelb Solvent Yellow 162, Rot Dispers Red *60*, Blau Solvent Blue 63 und Schwarz Solvent Black 3 oder als Pigment Gelb Pigment Yellow 127, Rot Pigment Red 122, Blau Pigment Blue 15:3 und Schwarz Carbon Black umfaßt.

6. Hotmelt-Tinte gemäß einem der Ansprüche 1 bis 6, dadurch gekennzeichnet, daß sie einen Schmelzpunkt von 30 bis 100° C, insbesondere von 50 bis 90° C, aufweist.

7. Hotmelt-Tinte gemäß einem der Ansprüche 1 bis 7, dadurch gekennzeichnet, daß sie 10 bis 75% Paraffin 10809, 4 bis 30% Phthalester des technischen Hydroabietylalkohols, 10 bis 75% Poly (1-ethenylpyrrolidon-2-on/triacont-1-en) und 1 bis 20% Pigmente oder 0,5 bis 5% Farbstoffe umfaßt.

8. Hotmelt-Tinte gemäß Anspruch 7, dadurch gekennzeichnet, daß sie etwa 64% Paraffin 10809, etwa 15% Phthalester des technischen Hydroabietylalkohols, etwa 21% Poly (1-ethenylpyrrolidon-2-on/triacont-1-en) und 1 bis 3% Farbstoffe oder 4 bis 15% Pigmente umfaßt.

9. Verwendung der Hotmelt-Tinte nach Anspruch 8 zum Verdrucken bei einer Temperatur von 80 bis 100° C.

## Claims

1. Abrasion-resistant and blocking-resistant hot-melt ink for inkjet printers, characterized in that the hot-melt ink comprises
a) a substance which is solid at room temperature and has a melting point of from 60 to 80°C, which ensures abrasion resistance and scratch resistance, in the form of a copolymer of polyvinylpyrrolidone and long-chain alpha-olefins,
b) an adhesion-promoting substance having a melting point of up to 100°C, which ensures flexibility and adhesion of the hot-melt ink to the printed paper,
c) a viscosity-mediating substance having a melting point of up to 100°C, in the form of an oil or a wax of low molecular mass, and
d) pigments or dyes.

2. Hot-melt ink according to Claim 1, characterized in that the copolymer of polyvinylpyrrolidone and long-chain alpha-olefins is poly(1-ethenylpyrrolid-2-one/triacont-1-ene).

3. Hot-melt ink according to Claim 1 or 2, characterized in that the adhesion-promoting substance is a phthalic ester of technical-grade hydroabietyl alcohol.

4. Hot-melt ink according to one of Claims 1 to 3, characterized in that the viscosity-mediating substance is a petroleum wax, especially paraffin.

5. Hot-melt ink according to one of Claims 1 to 4, characterized in that it comprises Solvent Yellow 162, Disperse Red 60, Solvent Blue 63 or Solvent Black 3 as dye or Pigment Yellow 127, Pigment Red 122, Pigment Blue 15:3 or Carbon Black as pigment.

6. Hot-melt ink according to one of Claims 1 to 6, characterized in that it has a melting point of from 30 to 100°C, in particular from 50 to 90°C.

7. Hot-melt ink according to one of Claims 1 to 7, characterized in that it comprises from 10 to 75% of paraffin 10809, from 4 to 30% of phthalic ester of technical-grade hydroabietyl alcohol, from 10 to 75% of poly(1-ethenylpyrrolid-2-one/triacont-1-ene) and from 1 to 20% of pigments or from 0.5 to 5% of dyes.

8. Hot-melt ink according to Claim 7, characterized in that it comprises about 64% of paraffin 10809, about 15% of phthalic ester of technical-grade hydroabietyl alcohol, about 21% of poly(1-ethenylpyrrolid-2-one/triacont-1-ene) and from 1 to 3% of dyes or from 4 to 15% of pigments.

9. Use of the hot-melt ink according to Claim 8 for printing at a temperature of from 80 to 100°C.

## Revendications

1. Encre thermofusible résistante à l'usure par frottement et à la formation de blocs pour imprimante à jet d'encre, caractérisée en ce que ladite encre thermofusible comprend :
a) une substance solide à la température ambiante, ayant un point de fusion de 60 à 80°C, qui confère la résistance à l'usure par frottement et aux éraflures, sous la forme d'un copolymère à base de polyvinylpyrrolidone et d'alpha-oléfines à chaîne longue,
b) une substance conférant l'adhérence, ayant un point de fusion allant jusqu'à 100°C, qui confère la flexibilité et l'adhérence de l'encre thermofusible sur le papier imprimé,
c) une substance conférant la viscosité, ayant un point de fusion allant jusqu'à 100°C, sous la forme d'une huile ou d'une cire de faible poids moléculaire, et
d) des pigments ou des colorants.

2. Encre thermofusible selon la revendication 1, caractérisée en ce que le copolymère à base de polyvinylpyrrolidone et d'alpha-oléfines à chaîne longue est du poly(1-éthénylpyrrolidone-2-one/triacont-1-ène).

3. Encre thermofusible selon la revendication 1 ou 2, caractérisée en ce que la substance conférant l'adhérence est un ester phtalique de l'alcool hydroabiétylique technique.

4. Encre thermofusible selon l'une des revendications 1 à 3, caractérisée en ce que la substance conférant la viscosité est une cire de pétrole, en particulier de la paraffine.

5. Encre thermofusible selon l'une des revendications 1 à 4, caractérisée en ce qu'elle contient, comme colorant, du Jaune *Solvent Yellow 162,* du Rouge *Dispers Red* 60, du Bleu *Solvant Blue 63* et du Noir *Solvant Black 3* ou, comme pigment, un Pigment Jaune *Yellow 127,* un Pigment Rouge *Red 122,* un Pigment Bleu *Blue 15:3* et du Noir *Carbon Black* (noir de carbone).

6. Encre thermofusible selon l'une des revendications 1 à 5, caractérisée en ce qu'elle présente un point de fusion de 30 à 100°C, en particulier de 50 à 90°C.

7. Encre thermofusible selon l'une des revendications 1 à 6, caractérisée en ce qu'elle contient de 10 à 75 % de paraffine 10809, de 4 à 30 % d'ester phtalique de l'alcool hydroabiétylique technique, de 10 à 75 % de poly(1-éthénylpyrrolidone-2-one/triacont-1-ène) et de 1 à 20 % de pigments ou de 0,5 à 5 % de colorants.

8. Encre thermofusible selon la revendication 7, caractérisée en ce qu'elle contient environ 64 % de paraffine 10809, environ 15 % d'ester phtalique de l'alcool hydroabiétylique technique, environ 21 % de poly(l-éthényl-pyrrolidone-2-one/triacont-1-ène) et de 1 à 3 % de colorants ou de 4 à 15 % de pigments.

9. Utilisation de l'encre thermofusible selon la revendication 8 pour une impression à une température de 80 à 100°C.
